# FASCICULE DE BREVET EUROPEEN

(11) **EP 2 759 222 B1**
(45) Date de publication et mention de la délivrance du brevet: **09.12.2015**
(21) Numéro de dépôt: 13152468.8
(22) Date de dépôt: 24.01.2013
(51) Int. Cl.: A44C 5/02, A44C 5/24, A44C 5/14

(54) **Maillon réglable**
Regulierbares Kettenglied
Adjustable link

(43) Date de publication de la demande: 30.07.2014
(73) Titulaire: Omega SA, 2500 Biel/ Bienne 4 (CH)
(72) Inventeur: Knuchel, Daniel, 2502 Biel (CH)
(74) Mandataire: Giraud, Eric

(56) Documents cités:
- EP-A1- 2 484 244
- CH-A1- 699 067
- CH-A5- 695 656
- FR-A1- 2 670 995

## Description

### Domaine de l'invention

L'invention concerne un maillon réglable pour bracelet, comportant au moins un premier demi-maillon et au moins un deuxième demi-maillon mobiles l'un par rapport à l'autre selon une direction dite de bracelet, et qui constituent un ensemble imperdable où :
- ledit premier demi-maillon, ou bien comporte au moins un organe de liaison et de verrouillage, ou bien est assemblé de façon fixe ou avec une mobilité restreinte selon ladite direction de bracelet avec au moins un organe de liaison et de verrouillage, ledit organe de liaison et de verrouillage s'étendant transversalement par rapport à ladite direction de bracelet et comportant des moyens de verrouillage,
- ledit deuxième demi-maillon, ou bien comporte des moyens de verrouillage complémentaire, ou bien est assemblé de façon fixe ou avec une mobilité restreinte selon ladite direction de bracelet avec des moyens de verrouillage complémentaire,
- lesdits moyens de verrouillage et lesdits moyens de verrouillage complémentaire définissent ensemble au moins deux positions de verrouillage en immobilisation dudit premier demi-maillon par rapport audit deuxième demi-maillon, discrètes et distantes selon ladite direction de bracelet,
- lesdits moyens de verrouillage ou/et lesdits moyens de verrouillage complémentaire sont mobiles, sous l'action d'un effort exercé selon ladite direction de bracelet et supérieur à une valeur donnée, à l'encontre de moyens de rappel élastique que comportent respectivement lesdits moyens de verrouillage complémentaire ou/et lesdits moyens de verrouillage, pour autoriser un changement de position relative entre ledit premier demi-maillon et ledit deuxième demi-maillon selon ladite direction de bracelet.

L'invention concerne encore un fermoir comportant une première partie et une deuxième partie attachables l'une à l'autre par des moyens de verrouillage.

L'invention concerne encore un boîtier de montre.

L'invention concerne encore un bracelet comportant au moins un premier brin et un deuxième brin de bracelet.

L'invention concerne encore une montre comportant un tel bracelet.

L'invention concerne le domaine des fixations réglables, en particulier pour les objets destinés à être portés sur le corps humain ou animal. Il concerne en particulier les fixations de bracelets, ceintures, sangles, baudriers et similaires, utilisés en particulier dans les domaines de la bijouterie, de la joaillerie, de la maroquinerie, ou encore dans la sellerie.

### Arrière-plan de l'invention

La fermeture de bracelets, colliers, ceintures, sangles et similaires est effectuée en général de façon réglable au niveau de positions prédéterminées, qui permettent un repositionnement précis, et que l'utilisateur peut régler par coopération d'un doigt avec un trou parmi une pluralité de trous, ou par l'accrochage d'un pion sur une crémaillère, ou similaire. Des fermetures de type continu à maintien en position par frottement n'offrent pas une possibilité de repositionnement précis.

Il est souvent nécessaire de disposer d'une fixation réglable en longueur, par exemple entre deux positions prédéterminées, pour tenir compte de facteurs climatiques, ou encore de la morphologie ou du confort de l'utilisateur.

Le document CH 699067 au nom de ELFIX PRODUCTION SA décrit un dispositif de réglage fin de la longueur d'un bracelet intégré dans le couvercle d'un fermoir, et comprenant un dispositif d'indexation dans deux positions prédéfinies, et qui comprend des poussoirs à ressort à bille solidaires d'une barrette transversale liés à une extrémité du bracelet et prévus pour coopérer avec des per4ages prévus dans le couvercle du fermoir.

Les documents EP 0 737 427 au nom de THE SWATCH GROUP MANAGEMENT SERVICES AG et CH 695 656 au nom de WERTHANOR SA décrivent des maillons réglables pour bracelets de montres, dans lesquels le réglage s'opère par actionnement d'un bouton de déverrouillage pour passer d'une position d'indexation de longueur à l'autre.

Le document FR 2 670 995 au nom de PERILLAT COLOMB décrit un barreau s'étendant dans la direction longitudinale d'un bracelet, et dont les extrémités sont chacune engagées dans une portion de maillon selon des positions d'indexation prédéfinies, soit par des barrettes à ressort, soit par des tétons coopérant avec des trous prévus sur le barreau. Le passage d'une position à l'autre nécessite l'emploi d'un outillage. Ces dispositifs d'indexation s'étendent de manière transversale et nécessitent un encombrement important. Ils sont de plus apparents, et nuisent à l'esthétique générale du bracelet.

Ces dispositifs connus agissent de manière transversale, nécessitent en général l'emploi d'un outil pour effectuer le réglage, et restent visibles.

Le document EP 2 484 244 au nom de OMEGA SA décrit un maillon réglable pour bracelet, comportant un premier demi-maillon et un deuxième demi-maillon mobiles l'un par rapport à l'autre selon une direction longitudinale, par la coopération de moyens de guidage et de moyens de guidage complémentaire, de façon à constituer un ensemble imperdable par la coopération de moyens d'arrêt et de moyens d'arrêt complémentaire. Le premier demi-maillon comporte un doigt s'étendant selon cette direction et comporte des moyens de verrouillage à rappel élastique sensiblement radial par rapport à cette direction, et qui sont mobiles entre une position repliée et une position déployée. Le deuxième demi-maillon comporte un canal s'étendant selon cette direction, et qui est agencé pour permettre le passage du doigt dans une seule des positions repliée ou déployée des moyens de verrouillage. Ce deuxième demi-maillon comporte encore, au voisinage du canal, des moyens de verrouillage complémentaire agencés pour coopérer dans au moins une position de verrouillage avec les moyens de verrouillage dans l'autre des positions déployée ou repliée des moyens de verrouillage, et les moyens de verrouillage et les moyens de verrouillage complémentaire définissent ensemble au moins deux positions de verrouillage discrètes et distantes selon la direction longitudinale.

### Résumé de l'invention

L'invention se propose de fournir une solution plus compacte que celles de l'art antérieur, agissant selon la direction longitudinale du bracelet, avec un mécanisme réglable sans outil particulier, où le mécanisme de réglage reste dissimulé, et comporte des moyens de rappel pour ramener le maillon réglable dans sa position raccourcie.

A cet effet, l'invention concerne un maillon réglable pour bracelet, comportant au moins un premier demi-maillon et au moins un deuxième demi-maillon mobiles l'un par rapport à l'autre selon une direction dite de bracelet, et qui constituent un ensemble imperdable, où :
- ledit premier demi-maillon, ou bien comporte au moins un organe de liaison et de verrouillage, ou bien est assemblé de façon fixe ou avec une mobilité restreinte selon ladite direction de bracelet avec au moins un organe de liaison et de verrouillage, ledit organe de liaison et de verrouillage s'étendant transversalement par rapport à ladite direction de bracelet et comportant des moyens de verrouillage,
- ledit deuxième demi-maillon, ou bien comporte des moyens de verrouillage complémentaire, ou bien est assemblé de façon fixe ou avec une mobilité restreinte selon ladite direction de bracelet avec des moyens de verrouillage complémentaire,
- lesdits moyens de verrouillage et lesdits moyens de verrouillage complémentaire définissent ensemble au moins deux positions de verrouillage en immobilisation dudit premier demi-maillon par rapport audit deuxième demi-maillon, discrètes et distantes selon ladite direction de bracelet,
- lesdits moyens de verrouillage ou/et lesdits moyens de verrouillage complémentaire sont mobiles, sous l'action d'un effort exercé selon ladite direction de bracelet et supérieur à une valeur donnée, à l'encontre de moyens de rappel élastique que comportent respectivement lesdits moyens de verrouillage complémentaire ou/et lesdits moyens de verrouillage, pour autoriser un changement de position relative entre ledit premier demi-maillon et ledit deuxième demi-maillon selon ladite direction de bracelet,
caractérisé en ce que ledit organe de liaison et de verrouillage est un élément sensiblement tubulaire constituant un moyen de rappel élastique pouvant occuper différentes positions entre une position contractée où sa section est minimale et une position libre et dilatée où sa section est maximale, et s'étendant selon une direction orthogonale à ladite direction de bracelet, et logé dans un logement dudit premier demi-maillon de direction sensiblement orthogonale à ladite direction, ledit logement étant dimensionné de façon à ce que, à l'état libre ledit élément déborde dudit logement au-delà d'une surface limite dudit premier demi-maillon laquelle surface limite s'étend parallèlement à ladite direction de bracelet, et à ce que, à l'état contracté sous l'effet de l'application d'une contrainte de compression, ou lors d'un mouvement relatif entre ledit deuxième demi-maillon et ledit premier demi-maillon lors duquel ledit élément est comprimé par une surface d'appui complémentaire dudit deuxième demi-maillon, ledit élément est maintenu en-deçà de ladite surface limite.

L'invention concerne encore un fermoir comportant une première partie et une deuxième partie attachables l'une à l'autre par des moyens de verrouillage, caractérisée en ce qu'au moins ladite première partie ou ladite deuxième partie comporte un tel maillon réglable.

L'invention concerne encore un boîtier de montre, dont la carrure constitue un tel maillon réglable, ou incorpore un tel maillon réglable .

L'invention concerne encore un bracelet comportant au moins un premier brin et un deuxième brin de bracelet, caractérisé en ce qu'il comporte au moins un tel maillon réglable, ledit maillon réglable étant, ou bien intercalé entre ledit premier brin et ledit deuxième brin auxquels il est relié par des premiers moyens d'attache entre ledit premier demi-maillon et ledit premier brin et par des deuxièmes moyens d'attache entre ledit deuxième demi-maillon et ledit deuxième brin, ou bien incorporé dans un tel fermoir, ladite première partie étant reliée par des premiers moyens avec ledit premier brin et ladite deuxième partie étant reliée par des deuxièmes moyens d'attache avec ledit deuxième brin,

L'invention concerne encore une montre comportant un tel bracelet, caractérisée en ce qu'un dit premier brin et un dit deuxième brin dudit bracelet maintiennent de part et d'autre un boîtier de montre.

### Description sommaire des dessins

D'autres caractéristiques et avantages de l'invention apparaîtront mieux à la lecture de la description détaillée qui va suivre, en référence aux dessins annexés, où :
- la figure 1 représente, de façon schématisée et en perspective éclatée, une première variante de maillon réglable selon l'invention ;
- la figure 2 représente, de façon schématisée et en section transversale par un plan médian, le maillon réglable de la figure 1, verrouillé dans une position repliée ;
- la figure 3 représente, de façon schématisée et en section longitudinale par un plan médian, le maillon réglable de la figure 1 dans sa position repliée ;
- la figure 4 représente, de façon similaire à la figure 3, le maillon réglable de la figure 1 dans sa position déployée ;
- la figure 5 représente, de façon schématisée et en section longitudinale selon un plan parallèle au plan médian, le maillon réglable de la figure 1 dans sa position repliée ;
- la figure 6 représente, de façon similaire à la figure 4, le maillon réglable de la figure 1 dans sa position déployée, avec des moyens d'arrêt de type imperdable comportant un alésage pour le passage d'une vis;
- la figure 7 représente, de façon schématisée et en section transversale, un fermoir selon l'invention, incorporant un maillon réglable de la figure 1, dans une position ouverte du fermoir ;
- la figure 8 représente, de façon schématisée et en vue en plan, un bracelet comportant le fermoir de la figure 7 ;
- la figure 9 représente, de façon schématisée et en vue en plan, un bracelet comportant un maillon réglable selon la figure 1 ;
- la figure 10 représente, de façon schématisée et en vue en plan, un bracelet comportant le fermoir de la figure 7 et un maillon réglable selon la figure 1 ;
- la figure 11 représente, de façon schématisée et en vue en plan, un bracelet comportant le fermoir de la figure 7 et une succession de maillons articulés ;
- la figure 12 représente, de façon schématisée et en vue en plan, une montre comportant un boîtier de montre maintenu par un bracelet comportant un maillon réglable selon la figure 1 ;
- la figure 13 représente, de façon similaire à la figure 1, une deuxième variante de maillon réglable.
- la figure 14 représente, de façon schématisée et en section transversale par un plan médian, le maillon réglable de la figure 13, verrouillé dans une position repliée ;
- la figure 15 représente, de façon schématisée et en section longitudinale par un plan médian, le maillon réglable de la figure 13 dans sa position déployée ;
- la figure 16 représente, de façon schématisée et en perspective, un deuxième demi-maillon du maillon réglable de la figure 13 ;
- la figure 17 représente, de façon similaire à la figure 15, une autre réalisation du maillon réglable de la figure 13 dans sa position déployée ;
- la figure 18 représente, de façon schématisée et en section longitudinale selon un plan médian, le maillon réglable de la figure 17 dans sa position déployée.

### Description détaillée des modes de réalisation préférés

L'invention concerne un maillon réglable 1 pour bracelet 200.

L'invention concerne le domaine des fixations réglables, en particulier pour les objets destinés à être portés sur le corps humain ou animal. Il concerne en particulier les fixations de bracelets, colliers, ceintures, sangles, baudriers et similaires, utilisés en particulier dans les domaines de la bijouterie, de la joaillerie, de la maroquinerie, ou encore dans la sellerie.

Ces objets différents par leurs dimensions ou leur forme de détail, mais similaires dans leur fonctionnalité, seront ci-après dénommés sous le vocable unique de « bracelet ».

Ce maillon réglable 1 pour bracelet 200 comporte au moins un premier demi-maillon 2 et au moins un deuxième demi-maillon 3 mobiles l'un par rapport à l'autre selon une direction dite de bracelet D et qui constituent un ensemble imperdable. Dans une réalisation particulière mais non limitative, la direction D est linéaire.

Selon l'invention :
- le premier demi-maillon 2, ou bien comporte au moins un organe de liaison et de verrouillage 23, ou bien est assemblé de façon fixe ou avec une mobilité restreinte selon la direction de bracelet D avec au moins un organe de liaison et de verrouillage 23. Cet organe de liaison et de verrouillage 23 s'étend transversalement par rapport à la direction de bracelet D et comporte des moyens de verrouillage 24,
- le deuxième demi-maillon 3, ou bien comporte des moyens de verrouillage complémentaire 34, ou bien est assemblé de façon fixe ou avec une mobilité restreinte selon la direction de bracelet D avec des moyens de verrouillage complémentaire 34,
- les moyens de verrouillage 24 et les moyens de verrouillage complémentaire 34 définissent ensemble au moins deux positions de verrouillage en immobilisation du premier demi-maillon 2 par rapport au deuxième demi-maillon 3, discrètes et distantes selon la direction de bracelet D,
- les moyens de verrouillage 24 ou/et les moyens de verrouillage complémentaire 34 sont mobiles, sous l'action d'un effort exercé selon la direction de bracelet D et supérieur à une valeur donnée, à l'encontre de moyens de rappel élastique que comportent respectivement les moyens de verrouillage complémentaire 34 ou/et les moyens de verrouillage 24, pour autoriser un changement de position relative entre le premier demi-maillon 2 et le deuxième demi-maillon 3 selon la direction de bracelet D.

La présente description ne décrit pas le cas d'un maillon réglable à plus de deux demi-maillons, l'homme du métier sachant extrapoler sans problème ce dispositif à une variante comportant plusieurs étages réglables en série.

Dans les réalisations préférées illustrées par les figures, le deuxième demi-maillon 3 comporte au moins un logement 33 s'étendant selon la direction de bracelet D et agencé pour permettre le passage de l'organe de liaison et de verrouillage 23 pour son maintien dans une seule des positions discrètes de verrouillage, et les moyens de verrouillage complémentaire 34 sont agencés au voisinage du canal 33.

De préférence, le au moins un premier demi-maillon 2 et le au moins un deuxième demi-maillon 3 sont guidés l'un par rapport à l'autre par la coopération de moyens de guidage 21 et de moyens de guidage complémentaire 31, et constituent un ensemble imperdable par la coopération de moyens d'arrêt 22 et de moyens d'arrêt complémentaire 32.

Ainsi, dans les réalisations illustrées, le deuxième demi-maillon 3 comporte au moins un canal 33 s'étendant selon la direction de bracelet D et comportant les moyens de guidage complémentaire 31.

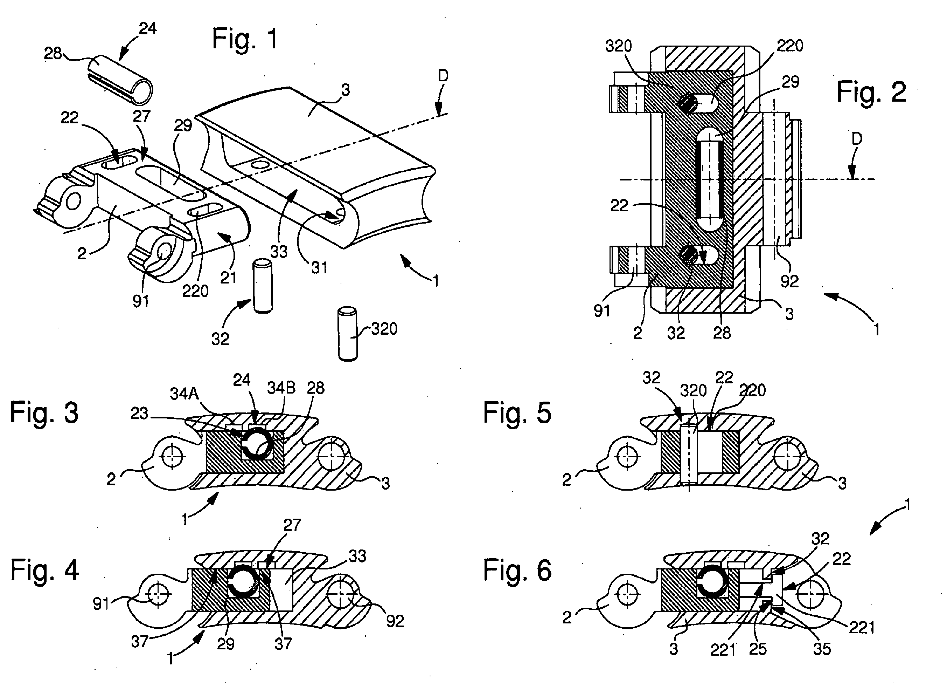

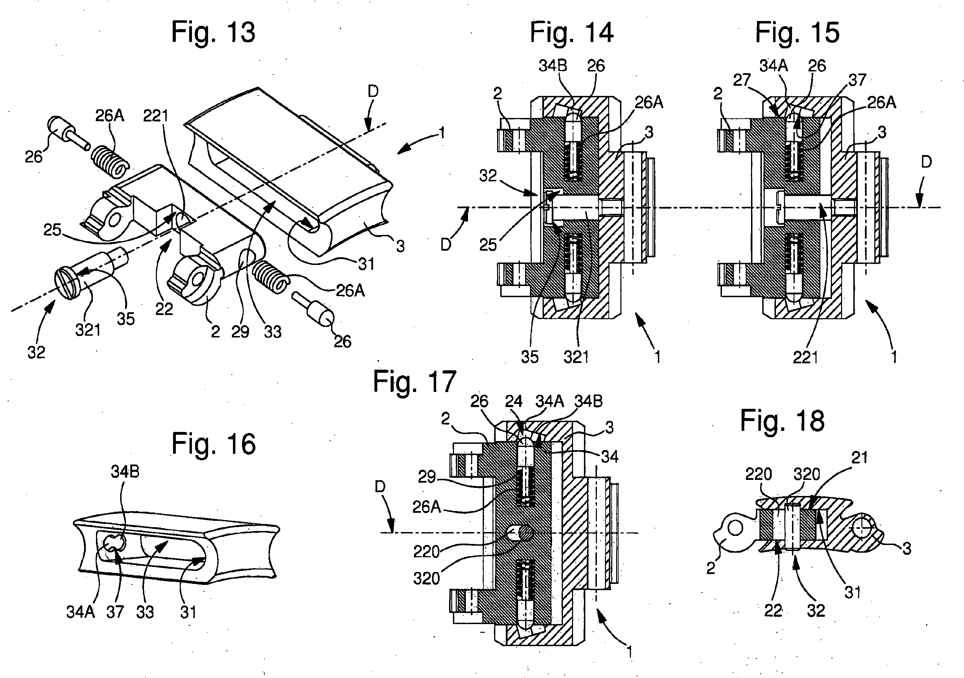

Les moyens de verrouillage complémentaire 34 sont avantageusement constitués par des chambres 34A ; 34B transversales par rapport à la direction de bracelet D correspondant chacune à une position relative du deuxième demi-maillon 3 par rapport au premier demi-maillon 2. Dans la première variante des figures 1 à 6, ces chambres 34A, 34B,sont des poches disjointes, provenant de moulage, de fonderie, ou encore d'usinage. Dans la deuxième variante des figures 13 à 18, ces chambres 34A, 34B, sont des perçages obliques, entre lesquels un bourrelet 37 est à franchir pour passer de l'une à l'autre, tel que visible sur la figure 16.

Dans la première variante des figures 1 à 6, l'organe de liaison et de verrouillage 23 est un élément 28 sensiblement tubulaire constituant un moyen de rappel élastique pouvant occuper différentes positions entre une position contractée où sa section est minimale et une position libre et dilatée où sa section est maximale. Cet élément 28 s'étend selon une direction orthogonale à la direction de bracelet D, et est logé dans un logement 29 du premier demi-maillon 2 de direction sensiblement orthogonale à la direction D. Ce logement 29 est dimensionné de façon à ce que, à l'état libre l'élément 28 déborde du logement 29 au-delà d'une surface limite 27 du premier demi-maillon 2. Cette surface limite 27 s'étend parallèlement à la direction de bracelet D. Et, à l'état contracté sous l'effet de l'application d'une contrainte de compression, ou lors d'un mouvement relatif entre le deuxième demi-maillon 3 et le premier demi-maillon 2 lors duquel l'élément 29 est comprimé par une surface d'appui complémentaire 37 du deuxième demi-maillon 3, l'élément 28 est maintenu en-deçà de la surface limite 27. Les figures 3 et 4 montrent la coopération successive de cet élément 28 avec les chambres 34B et 34A, dans deux positions, respectivement rapprochées et éloignées, des demi-maillons 2 et 3.

Dans la version illustrée, l'élément 28 est un ressort en tube fendu. Il peut encore, de façon non limitative, être un ressort hélicoïdal, ou un bourrelet en caoutchouc ou en élastomère, ou similaire.

Dans la deuxième variante des figures 13 à 18, l'organe de liaison et de verrouillage 23 est un poussoir 26 mû par un ressort 26A dans un logement 29 du premier demi-maillon 2 de direction sensiblement orthogonale à la direction D. Le logement 29 est dimensionné de façon à ce que, à l'état libre l'élément 28 déborde du logement 29 au-delà d'une surface limite 27 du premier demi-maillon 2, cette surface limite 27 s'étendant parallèlement à la direction de bracelet D. Et à ce que, à l'état contracté sous l'effet de l'application d'une contrainte de compression, ou lors d'un mouvement relatif entre le deuxième demi-maillon 3 et le premier demi-maillon 2 lors duquel l'élément 29 est comprimé par une surface d'appui complémentaire 37 du deuxième demi-maillon 3, l'élément 28 est maintenu en-deçà de la surface limite 27. Les figures 15 et 16 montrent les deux positions possibles dans cette variante de réalisation.

De préférence, le premier demi-maillon 2 et le deuxième demi-maillon 3 comportent respectivement les moyens d'arrêt 22 et les moyens d'arrêt complémentaire 32, selon la direction de bracelet D pour leur montage imperdable l'un par rapport à l'autre, et pour définir une course maximale de réglage entre une première position rapprochée où une première face d'appui 25 du premier demi-maillon 2 est en contact avec une deuxième face d'appui 35 du deuxième demi-maillon 3, et une deuxième position éloignée où les moyens d'arrêt 22 sont en contact avec les moyens d'arrêt complémentaire 32.

Dans une réalisation avantageuse, les moyens de verrouillage 24 ou/et les moyens de verrouillage complémentaire 34 comportent au moins une rampe autorisant, sous l'action d'un effort appliqué selon la direction de bracelet D sur le premier 2 ou/et deuxième 3 demi-maillon, et lors du mouvement relatif entre le premier 2 et le deuxième 3 demi-maillon, le passage des moyens de verrouillage 24 de leur position repliée à leur position déployée ou inversement.

Dans une première réalisation visible sur les figures 1, 2, 5, 17 et 18, les moyens d'arrêt 22 sont constitués par une lumière oblongue 220 s'étendant selon la direction D, et les moyens d'arrêt complémentaire 32 sont constitués par une goupille 320 circulant dans la lumière oblongue 320.

Dans une deuxième réalisation visible sur les figures 6, et 13 à 15, les moyens d'arrêt 22 sont constitués par une tête de vis 25, 35 ou une surface de butée 35, 25 agencée pour coopérer en butée, en position d'extension maximale du maillon réglable 1 avec respectivement une surface de butée 35, 25 ou une tête de vis 25, 35 complémentaire. La figure 6 montre ainsi une vis 221 solidaire du premier demi-maillon 2, circulant dans un alésage 221 du deuxième demi-maillon 3, et dont une surface 25 de la tête de vis est agencée pour venir en position de butée sur une face 35 que comporte le deuxième demi-maillon 3. Cette figure 6 est simplifiée pour présenter simplement le principe d'un arrêt axial, et fait abstraction des éléments de décor que comporte un bracelet articulé, ou un maillon réglable selon l'invention, notamment pour cacher la zone d'articulation ; naturellement, dans la position repliée du maillon réglable 1, la face de la tête de vis doit rester suffisamment éloignée de l'axe d'articulation pour permettre la liaison correcte avec le reste du bracelet auquel il est incorporé. La figure 13 montre, à l'inverse, une vis 321 solidaire du deuxième demi-maillon 3, circulant dans un alésage 221 du premier demi-maillon 2 et dont une surface 35 de la tête de vis est agencée pour venir en position de butée sur une face 25 que comporte le premier demi-maillon 2.

L'invention concerne encore un fermoir 100, comportant une première partie 101 et une deuxième partie 102 attachables l'une à l'autre par des moyens de verrouillage, non détaillés ici car bien connus de l'homme du métier. Selon l'invention, au moins la première partie 101 ou la deuxième partie 102 comporte un tel maillon réglable 1.

L'invention concerne encore un boîtier de montre 301, dont la carrure constitue un maillon réglable 1 selon l'invention, ou incorpore un tel maillon réglable 1.

L'invention concerne encore un bracelet 200 comportant au moins un premier brin 201 et un deuxième brin 202 de bracelet. Selon l'invention, ce bracelet 200 comporte au moins un tel maillon réglable 1. Ce maillon réglable 1 est, ou bien intercalé entre le premier brin 201 et le deuxième brin 202 auxquels il est relié par des premiers moyens d'attache 91 entre le premier demi-maillon 2 et le premier brin 201 et par des deuxièmes moyens d'attache 92 entre le deuxième demi-maillon 3 et le deuxième brin 202, ou bien incorporé dans un tel fermoir 100. Dans ce dernier cas, la première partie 101 est reliée par des premiers moyens d'attache 93 avec le premier brin 201 et la deuxième partie 102 est reliée par des deuxièmes moyens d'attache 94 avec le deuxième brin 202,

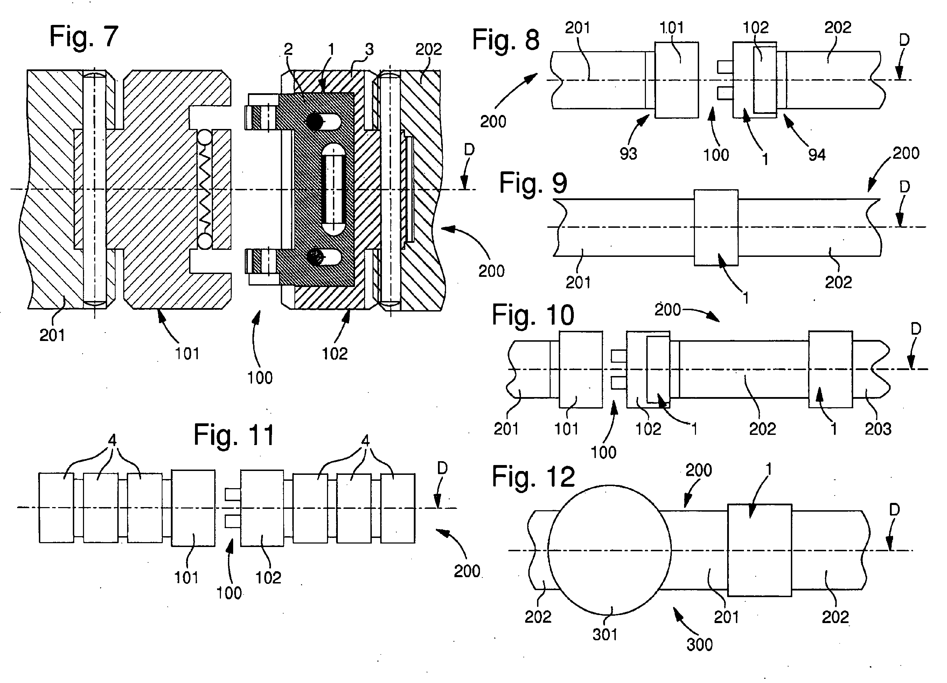

Dans une réalisation particulière, tel que visible sur la figure 11, ce bracelet 200 est un bracelet articulé comportant une succession de maillons 4 articulés l'un à l'autre et dont au moins un est un tel maillon réglable 1. Dans une réalisation particulière, ce bracelet 200 comporte un tel fermoir 100, et tous les autres dits maillons 4 constituant le bracelet 200 sont articulés les uns par rapport aux autres dans un montage irréversible interdisant leur démontage. Dans une version à grande amplitude de réglage, le bracelet 200 comporte plusieurs tels maillons 4 chacun constitués d'un tel maillon réglable 1 de façon à couvrir l'amplitude totale de réglage du bracelet 200 par le cumul des plages de réglage de tous les maillons réglables.

L'invention concerne encore une montre 300 comportant un tel bracelet 200. Selon l'invention un premier brin 201 et un deuxième brin 202 du bracelet 200 maintiennent de part et d'autre un boîtier de montre 301. Et, dans une réalisation particulière, ce boîtier de montre 301, a une carrure qui constitue un maillon réglable 1 selon l'invention, ou incorpore un tel maillon réglable 1.

L'invention remplit donc les buts désignés, agit selon la direction longitudinale du bracelet, avec un mécanisme réglable sans outil particulier, où le mécanisme de réglage reste dissimulé, et comporte des moyens de rappel pour ramener le maillon réglable dans sa position raccourcie. Le mécanisme est adaptable à des formes non linéaires, et permet un réglage facile en toute sécurité, sans risque de perte du bracelet.

## Revendications

1. Maillon réglable (1) pour bracelet (200), comportant au moins un premier demi-maillon (2) et au moins un deuxième demi-maillon (3) mobiles l'un par rapport à l'autre selon une direction dite de bracelet (D), et qui constituent un ensemble imperdable, où :
- ledit premier demi-maillon (2), ou bien comporte au moins un organe de liaison et de verrouillage (23), ou bien est assemblé de façon fixe ou avec une mobilité restreinte selon ladite direction de bracelet (D) avec au moins un organe de liaison et de verrouillage (23), ledit organe de liaison et de verrouillage (23) s'étendant transversalement par rapport à ladite direction de bracelet (D) et comportant des moyens de verrouillage (24),
- ledit deuxième demi-maillon (3), ou bien comporte des moyens de verrouillage complémentaire (34), ou bien est assemblé de façon fixe ou avec une mobilité restreinte selon ladite direction de bracelet (D) avec des moyens de verrouillage complémentaire (34),
- lesdits moyens de verrouillage (24) et lesdits moyens de verrouillage complémentaire (34) définissent ensemble au moins deux positions de verrouillage en immobilisation dudit premier demi-maillon (2) par rapport audit deuxième demi-maillon (3), discrètes et distantes selon ladite direction de bracelet (D),
- lesdits moyens de verrouillage (24) ou/et lesdits moyens de verrouillage complémentaire (34) sont mobiles, sous l'action d'un effort exercé selon ladite direction de bracelet (D) et supérieur à une valeur donnée, à l'encontre de moyens de rappel élastique que comportent respectivement lesdits moyens de verrouillage complémentaire (34) ou/et lesdits moyens de verrouillage (24), pour autoriser un changement de position relative entre ledit premier demi-maillon (2) et ledit deuxième demi-maillon (3) selon ladite direction de bracelet (D),
**caractérisé en ce que** ledit organe de liaison et de verrouillage (23) est un élément (28) sensiblement tubulaire constituant un moyen de rappel élastique pouvant occuper différentes positions entre une position contractée où sa section est minimale et une position libre et dilatée où sa section est maximale, et s'étendant selon une direction orthogonale à ladite direction de bracelet (D), et logé dans un logement (29) dudit premier demi-maillon (2) de direction sensiblement orthogonale à ladite direction (D), ledit logement (29) étant dimensionné de façon à ce que, à l'état libre ledit élément (28) déborde dudit logement (29) au-delà d'une surface limite (27) dudit premier demi-maillon (2) laquelle surface limite (27) s'étend parallèlement à ladite direction de bracelet (D), et à ce que, à l'état contracté sous l'effet de l'application d'une contrainte de compression, ou lors d'un mouvement relatif entre ledit deuxième demi-maillon (3) et ledit premier demi-maillon (2) lors duquel ledit élément (29) est comprimé par une surface d'appui complémentaire (37) dudit deuxième demi-maillon (3), ledit élément (28) est maintenu en-deçà de ladite surface limite (27).

2. Maillon réglable (1) selon la revendication 1, **caractérisé en ce que** ledit deuxième demi-maillon (3) comporte au moins un logement (33) s'étendant selon ladite direction de bracelet (D) et agencé pour permettre le passage dudit organe de liaison et de verrouillage (23) pour son maintien dans une seule desdites positions discrètes de verrouillage, et **en ce que** lesdits moyens de verrouillage complémentaire (34) sont agencés au voisinage dudit canal (33).

3. Maillon réglable (1) selon la revendication 1 ou 2, **caractérisé en ce que** ledit au moins un premier demi-maillon (2) et ledit au moins un deuxième demi-maillon (3) sont guidés l'un par rapport à l'autre par la coopération de moyens de guidage (21) et de moyens de guidage complémentaire (31), et constituent un ensemble imperdable par la coopération de moyens d'arrêt (22) et de moyens d'arrêt complémentaire (32).

4. Maillon réglable (1) selon la revendication 3, **caractérisé en ce que** ledit deuxième demi-maillon (3) comporte au moins un canal (33) s'étendant selon ladite direction de bracelet (D) et comportant lesdits moyens de guidage complémentaire (31).

5. Maillon réglable (1) selon l'une des revendications précédentes, **caractérisé en ce que** lesdits moyens de verrouillage complémentaire (34) sont constitués par des chambres (34A ; 34B) transversales par rapport à ladite direction de bracelet (D) correspondant chacune à une position relative dudit deuxième demi-maillon (3) par rapport audit premier demi-maillon (2).

6. Maillon réglable (1) selon l'une des revendications 1 à 5, **caractérisé en ce que** ledit élément (28) est un ressort en tube fendu.

7. Maillon réglable (1) selon l'une des revendications 1 à 5, **caractérisé en ce que** ledit élément (28) est un ressort hélicoïdal.

8. Maillon réglable (1) selon l'une des revendications 1 à 5, **caractérisé en ce que** ledit élément (28) est un bourrelet en caoutchouc ou en élastomère.

9. Maillon réglable (1) selon la revendication 3, **caractérisé en ce que** ledit premier demi-maillon (2) et ledit deuxième demi-maillon (3) comportent respectivement lesdits moyens d'arrêt (22) et lesdits moyens d'arrêt complémentaire (32), selon ladite direction de bracelet (D) pour leur montage imperdable l'un par rapport à l'autre, et pour définir une course maximale de réglage entre une première position rapprochée où une première face d'appui (25) dudit premier demi-maillon (2) est en contact avec une deuxième face d'appui (35) dudit deuxième demi-maillon (3), et une deuxième position éloignée où lesdits moyens d'arrêt (22) sont en contact avec lesdits moyens d'arrêt complémentaire (32).

10. Maillon réglable (1) selon l'une des revendications précédentes, **caractérisé en ce que** lesdits moyens de verrouillage (24) ou/et lesdits moyens de verrouillage complémentaire (34) comportent au moins une rampe autorisant, sous l'action d'un effort appliqué selon ladite direction de bracelet (D) sur ledit premier (2) ou/et deuxième (3) demi-maillon, et lors du mouvement relatif entre ledit premier (2) et ledit deuxième (3) demi-maillon, le passage desdits moyens de verrouillage (24) de leur position repliée à leur position déployée ou inversement.

11. Maillon réglable (1) selon la revendication 3, **caractérisé en ce que** lesdits moyens d'arrêt (22) sont constitués par une lumière oblongue (220) s'étendant selon ladite direction (D), et **en ce que** lesdits moyens d'arrêt complémentaire (32) sont constitués par une goupille (320) circulant dans ladite lumière oblongue (320).

12. Maillon réglable (1) selon la revendication 3, **caractérisé en ce que** lesdits moyens d'arrêt (22) sont constitués par une tête de vis (25, 35) ou une surface de butée (35, 25) agencée pour coopérer en butée, en position d'extension maximale dudit maillon réglable (1) avec respectivement une surface de butée (35, 25) ou une tête de vis (25, 35) complémentaire.

13. Fermoir (100) comportant une première partie (101) et une deuxième partie (102) attachables l'une à l'autre par des moyens de verrouillage, **caractérisée en ce qu'**au moins ladite première partie (101) ou ladite deuxième partie (102) comporte un maillon réglable (1) selon une des revendications précédentes.

14. Boîtier de montre (301), **caractérisé en ce qu'**il comporte une carrure constituant un dit maillon réglable (1) selon une des revendications 1 à 12, ou **en ce qu'**il incorpore un tel maillon réglable (1).

15. Bracelet (200) comportant au moins un premier brin (201) et un deuxième brin (202) de bracelet, **caractérisé en ce qu'**il comporte au moins un maillon réglable (1) selon l'une des revendications 1 à 12, ledit maillon réglable (1) étant, ou bien intercalé entre ledit premier brin (201) et ledit deuxième brin (202) auxquels il est relié par des premiers moyens d'attache (91) entre ledit premier demi-maillon (2) et ledit premier brin (201) et par des deuxièmes moyens d'attache (92) entre ledit deuxième demi-maillon (3) et ledit deuxième brin (202), ou bien incorporé dans un dit fermoir (100) selon la revendication 13, ladite première partie (101) étant reliée par des premiers moyens d'attache (93) avec ledit premier brin (201) et ladite deuxième partie (102) étant reliée par des deuxièmes moyens d'attache (94) avec ledit deuxième brin (202),

16. Bracelet (200) selon la revendication précédente, **caractérisé en ce qu'**il est un bracelet articulé comportant une succession de maillons (4) articulés l'un à l'autre et dont au moins un est un dit maillon réglable (1).

17. Bracelet (200) selon la revendication précédente, **caractérisé en ce qu'**il comporte un dit fermoir (100) selon la revendication 13, et que tous les autres dits maillons (4) constituant ledit bracelet (200) sont articulés les uns par rapport aux autres dans un montage irréversible interdisant leur démontage.

18. Bracelet (200) selon la revendication précédente, **caractérisé en ce qu'**il comporte plusieurs dits maillons (4) chacun constitués d'un dit maillon réglable (1) de façon à couvrir l'amplitude totale de réglage dudit bracelet (200) par le cumul des plages de réglage de tous lesdits maillons réglables.

19. Montre (300) comportant un bracelet (200) selon l'une des revendications 15 à 18 **caractérisée en ce qu'**un dit premier brin (201) et un dit deuxième brin (202) dudit bracelet (200) maintiennent de part et d'autre un boîtier de montre (301).

20. Montre (300) selon la revendication précédente, **caractérisée en ce que** son dit boîtier (301) comporte une carrure constituant un dit maillon réglable (1) selon une des revendications 1 à 12, ou **en ce que** son dit boîtier (301) incorpore un dit maillon réglable (1) selon une des revendications 1 à 13.

## Patentansprüche

1. Einstellbares Glied (1) für Armband (200), das wenigstens ein erstes Halbglied (2) und wenigstens ein zweites Halbglied (3) umfasst, die relativ zueinander in einer sogenannten Armbandrichtung (D) beweglich sind und eine unverlierbare Anordnung bilden, wobei:
- das erste Halbglied (2) entweder wenigstens ein Verbindungs- und Verriegelungsorgan (23) umfasst oder fest oder mit beschränkter Beweglichkeit in der Armbandrichtung (D) mit wenigstens einem Verbindungs- und Verriegelungsorgan (23) zusammengefügt ist, wobei sich das Verbindungs- und Verriegelungsorgan (23) in Bezug auf die Armbandrichtung (D) quer erstreckt und Verriegelungsmittel (24) umfasst,
- das zweite Halbglied (3) entweder komplementäre Verriegelungsmittel (34) umfasst oder fest oder mit beschränkter Beweglichkeit in der Armbandrichtung (D) mit komplementären Verriegelungsmitteln (34) zusammengefügt ist,
- die Verriegelungsmittel (24) und die komplementären Verriegelungsmittel (34) zusammen wenigstens zwei Verriegelungspositionen mit Immobilisierung des ersten Halbglieds (2) in Bezug auf das zweite Halbglied (3), die in Armbandrichtung (D) diskret und voneinander beabstandet sind, definieren,
- die Verriegelungsmittel (24) und/oder die komplementären Verriegelungsmittel (34) unter der Wirkung einer Kraft, die in der Armbandrichtung (D) ausgeübt wird und größer als ein gegebener Wert ist, entgegen elastischen Rückstellmitteln, die die komplementären Verriegelungsmittel (34) und/oder die Verriegelungsmittel (24) aufweisen, beweglich sind, um eine Änderung der relativen Position zwischen dem ersten Halbglied (2) und dem zweiten Halbglied (3) in der Armbandrichtung (D) zuzulassen,
**dadurch gekennzeichnet, dass** das Verbindungs- und Verriegelungsorgan (23) ein im Wesentlichen rohrförmiges Element (28) ist, das ein elastisches Rückstellmittel bildet, das unterschiedliche Positionen zwischen einer kontrahierten Position, in der sein Querschnitt minimal ist, und einer freien und gedehnten Position, in der sein Querschnitt maximal ist, verschiedene Positionen einnehmen kann und sich in einer Richtung senkrecht zu der Armbandrichtung (D) erstreckt und sich in einem Aufnahmeraum (29) des ersten Halbglieds (2), der eine zu der Richtung (D) im Wesentlichen senkrechte Richtung hat, befindet, wobei der Aufnahmeraum (29) so bemessen ist, dass im freien Zustand das Element (28) den Aufnahmeraum (29) über eine Grenzoberfläche (27) des ersten Halbglieds (2) hinaus überragt, wobei sich die Grenzoberfläche (27) parallel zu der Armbandrichtung (D) erstreckt, und dass im kontrahierten Zustand unter der Wirkung der Ausübung einer Kompressionsbeanspruchung oder bei einer Relativbewegung zwischen dem zweiten Halbglied (3) und dem ersten Halbglied (2), bei der das Element (29) durch eine komplementäre Abstützoberfläche (37) des zweiten Halbglieds (3) komprimiert wird, das Element (28) unterhalb der Grenzoberfläche (27) gehalten wird.

2. Einstellbares Glied (1) nach Anspruch 1, **dadurch gekennzeichnet, dass** das zweite Halbglied (3) wenigstens einen Aufnahmeraum (33) umfasst, der sich in der Armbandrichtung (D) erstreckt und dafür ausgelegt ist, den Durchgang des Verbindungs- und Verriegelungsorgans (23) zuzulassen, damit es in einer einzigen der diskreten Verriegelungspositionen gehalten wird, und dass die komplementären Verriegelungsmittel (34) in der Nähe des Kanals (33) angeordnet sind.

3. Einstellbares Glied (1) nach Anspruch 1 oder 2, **dadurch gekennzeichnet, dass** das wenigstens eine erste Halbglied (2) und das wenigstens eine zweite Halbglied (3) relativ zueinander durch die Zusammenwirkung von Führungsmitteln (21) und von komplementären Führungsmitteln (31) geführt werden und durch die Zusammenwirkung von Anschlagmitteln (22) und komplementären Anschlagmitteln (32) eine unverlierbare Anordnung bilden.

4. Einstellbares Glied (1) nach Anspruch 3, **dadurch gekennzeichnet, dass** das zweite Halbglied (3) wenigstens einen Kanal (33) umfasst, der sich in der Armbandrichtung (D) erstreckt und die komplementären Führungsmittel (31) aufweist.

5. Einstellbares Glied (1) nach einem der vorhergehenden Ansprüche, **dadurch gekennzeichnet, dass** die komplementären Verriegelungsmittel (34) durch Kammern (34A; 34B) gebildet sind, die quer zu der Armbandrichtung (D) verlaufen und jeweils einer relativen Position des zweiten Halbglieds (3) in Bezug auf das erste Halbglied (2) entsprechen.

6. Einstellbares Glied (1) nach einem der Ansprüche 1 bis 5, **dadurch gekennzeichnet, dass** das Element (28) eine Schlitzrohrfeder ist.

7. Einstellbares Glied (1) nach einem der Ansprüche 1 bis 5, **dadurch gekennzeichnet, dass** das Element (28) eine Schraubenfeder ist.

8. Einstellbares Glied (1) nach einem der Ansprüche 1 bis 5, **dadurch gekennzeichnet, dass** das Element (28) ein Kautschuk- oder Elastomerwulst ist.

9. Einstellbares Glied (1) nach Anspruch 3, **dadurch gekennzeichnet, dass** das erste Halbglied (2) und das zweite Halbglied (3) die Anschlagmittel (22) bzw. die komplementären Anschlagmittel (32) in der Armbandrichtung (D) umfassen, um sie relativ zueinander unverlierbar zu montieren und um eine maximale Einstellbahn zwischen einer ersten angenäherten Position, in der eine erste Abstützfläche (25) des ersten Halbglieds (2) in Kontakt mit einer zweiten Abstützfläche (35) des zweiten Halbglieds (3) ist, und einer zweiten entfernten Position, in der die Anschlagmittel (22) in Kontakt mit den komplementären Anschlagmitteln (32) sind, zu definieren.

10. Einstellbares Glied (1) nach einem der vorhergehenden Ansprüche, **dadurch gekennzeichnet, dass** die Verriegelungsmittel (24) und/oder die komplementären Verriegelungsmittel (34) wenigstens eine Rampe umfassen, die unter der Wirkung einer Kraft, die in Armbandrichtung (D) auf das erste (2) und/oder das zweite (3) Halbglied ausgeübt wird, und bei einer Relativbewegung zwischen dem ersten (2) und dem zweiten (3) Halbglied einen Übergang der Verriegelungsmittel (24) von ihrer zusammengeklappten Position in ihre ausgeklappte Position und umgekehrt zuzulassen.

11. Einstellbares Glied (1) nach Anspruch 3, **dadurch gekennzeichnet, dass** die Anschlagmittel (22) durch ein Langloch (220) gebildet sind, das sich in der Richtung (D) erstreckt, und dass die komplementären Anschlagmittel (32) durch einen Stift (320) gebildet sind, der in dem Langloch (320) läuft.

12. Einstellbares Glied (1) nach Anspruch 3, **dadurch gekennzeichnet, dass** die Anschlagmittel (22) durch einen Schraubenkopf (25, 35) oder eine Anschlagoberfläche (35, 25) gebildet sind, die dafür ausgelegt sind, in einer maximalen Ausfahrposition des einstellbaren Glieds (1) mit einer komplementären Anschlagoberfläche (35, 25) oder einem komplementären Schraubenkopf (25, 35) anschlagend zusammenzuwirken.

13. Schließe (100), die einen ersten Teil (101) und einen zweiten Teil (102) umfasst, die aneinander durch Verriegelungsmittel befestigbar sind, **dadurch gekennzeichnet, dass** der erste Teil (101) und/oder der zweite Teil (102) ein einstellbares Glied (1) nach einem der vorhergehenden Ansprüche aufweist.

14. Uhrengehäuse (301), **dadurch gekennzeichnet, dass** es einen Gehäusemittelteil aufweist, der ein einstellbares Glied (1) nach einem der Ansprüche 1 bis 12 bildet oder der ein solches einstellbares Glied (1) umfasst.

15. Armband (200), das wenigstens einen ersten Armbandzweig (201) und einen zweiten Armbandzweig (202) umfasst, **dadurch gekennzeichnet, dass** es wenigstens ein einstellbares Glied (1) nach einem der Ansprüche 1 bis 12 umfasst, wobei das einstellbare Glied (1) entweder zwischen den ersten Zweig (201) oder den zweiten Zweig (202), mit denen es durch erste Befestigungsmittel (91) zwischen dem ersten Halbglied (2) und dem ersten Zweig (201) und durch zweite Befestigungsmittel (92) zwischen dem zweiten Halbglied (3) und dem zweiten Zweig (202) verbunden ist, eingefügt ist oder in eine Schließe (100) nach Anspruch 13 eingefügt ist, wobei der erste Teil (101) durch erste Befestigungsmittel (93) mit dem ersten Zweig (201) verbunden ist und der zweite Teil (102) durch zweite Befestigungsmittel (94) mit dem zweiten Zweig (202) verbunden ist.

16. Armband (200) nach dem vorhergehenden Anspruch, **dadurch gekennzeichnet, dass** es ein Gelenkarmband ist, das eine Folge von aneinander angelenkten Gliedern (4) umfasst, wovon wenigstens eines ein solches einstellbares Glied (1) ist.

17. Armband (200) nach dem vorhergehenden Anspruch, **dadurch gekennzeichnet, dass** es eine Schließe (100) nach Anspruch 13 umfasst und dass alle anderen Glieder (4), die das Armband (200) bilden, aneinander in einer irreversiblen Montage, die ihre Demontage verhindert, angelenkt sind.

18. Armband (200) nach dem vorhergehenden Anspruch, **dadurch gekennzeichnet, dass** es mehrere solche Glieder (4) umfasst, wovon jedes aus einem solchen einstellbaren Glied (1) gebildet ist, derart, dass die gesamte Einstellamplitude des Armbands (200) durch Kumulation der Einstellbereiche sämtlicher einstellbaren Glieder abgedeckt ist.

19. Uhr (300), die ein Armband (200) nach einem der Ansprüche 15 bis 18 umfasst, **dadurch gekennzeichnet, dass** ein erster Zweig (201) und ein zweiter Zweig (202) des Armbands (200) beiderseits ein Uhrengehäuse (301) halten.

20. Uhr (300) nach dem vorhergehenden Anspruch, **dadurch gekennzeichnet, dass** ihr Gehäuse (301) einen Gehäusemittelteil aufweist, der ein einstellbares Glied (1) nach einem der Ansprüche 1 bis 12 bildet, oder dass sein Gehäuse (301) ein solches einstellbares Glied (1) nach einem der Ansprüche 1 bis 12 umfasst.

## Claims

1. Adjustable link (1) for a bracelet (200), comprising at least a first half link (2) and at least a second half link (3) movable in relation to each other in a bracelet direction (D), and which form together an indissociable assembly, wherein:
- said first half link (2) either comprises at least one connecting and locking member (23), or is assembled fixedly or with restricted mobility in said bracelet direction (D) with at least one connecting and locking member (23); said connecting and locking member (23) extending transversely to said bracelet direction (D) and comprising a locking means (24),
- said second half link (3) either includes a complementary locking means (34) or is assembled fixedly or with restricted mobility in said bracelet direction (D) with a complementary locking means (34),
- said locking means (24) and said complementary locking means (34) together define at least two locking positions for immobilising said first half link (2) with respect to said second half link (3), said positions being discrete and remote from each other in said bracelet direction (D),
- said locking means (24) and/or said complementary locking means (34) are movable, under the action of a force exerted in said bracelet direction (D) and greater than a given value, against elastic return means respectively comprised in said complementary locking means (34) and/or said locking means (24), to allow a relative change of position between said first half link (2) and said second half link (3) in said bracelet direction (D), **characterized in that** said connecting and locking member (23) is a substantially tubular element (28) forming an elastic return means able to occupy various positions between a contracted position where the cross-section thereof is minimum and a free, expanded position where the cross-section thereof is maximum, and extending in an orthogonal direction to said bracelet direction (D), and housed inside a housing (29) of said first half link (2) whose direction is substantially orthogonal to said direction (D), said housing (29) being sized such that, in the free state, said element (28) projects beyond a boundary surface (27) of said first half link (2), said boundary surface (27) extends parallel to said bracelet direction (D), and **in that**, in the contracted state under the effect of the application of a compressive stress, or during a relative motion between said second half link (3) and said first half link (2) when said element (28) is compressed by a complementary bearing surface (37) of said second half link (3), said element (28) is held within said boundary surface (27).

2. Adjustable link (1) according to claim 1, **characterized in that** said second half link (3) comprises at least one housing (33) which extends in said bracelet direction (D) and is arranged to allow said connecting and locking member (23) to pass and be held in only one of said discrete locking positions, and **in that** said complementary locking means (34) is arranged in proximity to said channel (33).

3. Adjustable link (1) according to claim 1 or 2, **characterized in that** said at least one first half link (2) and said at least one second half link (3) are guided with respect to each other by the cooperation of guide means (21) and complementary guide means (31) and form an indissociable assembly by the cooperation of arresting means (22) and complementary arresting means (32).

4. Adjustable link (1) according to claim 3, **characterized in that** said second half link (3) includes at least one channel (33) extending in said bracelet direction (D) and including said complementary guide means (31).

5. Adjustable link (1) according to any of the preceding claims, **characterized in that** said complementary locking means (34) is formed by chambers (34B; 34B) transverse to said bracelet direction (D) and each corresponding to a relative position of said second half link (3) with respect to said first half link (2).

6. Adjustable link (1) according to any of claims 1 to 5, **characterized in that** said element (28) is a split tube spring.

7. Adjustable link (1) according to any of claims 1 to 5, **characterized in that** said element (28) is a helical spring.

8. Adjustable link (1) according to any of claims 1 to 5, **characterized in that** said element (28) is a rubber or elastomer bulge portion.

9. Adjustable link (1) according to claim 3, **characterized in that** said first half link (2) and said second half link (3) respectively comprise said arresting means (22) and said complementary arresting means (32), in said bracelet direction (D) for the indissociable assembly of said half links in relation to each other, and to define a maximum adjustment stroke between a first close position where a first bearing surface (25) of said first half link (2) is in contact with a second bearing surface (35) of said second half link (3), and a second remote position where said arresting means (22) is in contact with said complementary arresting means (32).

10. Adjustable link (1) according to any of the preceding claims, **characterized in that** said locking means (24) and/or said complementary locking means (34) comprise at least one ramp which, under the action of a force applied in said bracelet direction (D) to said first half link (2) and/or said second half link (3), and during the relative motion between said first half link (2) and second half link (3), allows said locking means (24) to change from the folded position to the unfolded position thereof or vice versa.

11. Adjustable link (1) according to claim 3, **characterized in that** said arresting means (22) is formed by an oblong hole (220) extending in said direction (D), and **in that** said complementary arresting means (32) is formed by a pin (320) moving in said oblong hole (320).

12. Adjustable link (1) according to claim 3, **characterized in that** said arresting means (22) is formed by a screw head (25, 35) or a stop surface (35, 25) arranged to cooperate in abutment, in a position of maximum extension of said adjustable link (1), respectively with a complementary stop surface (35, 25) or screw head (25, 35).

13. Clasp (100) including a first part (101) and a second part (102) attachable to each other by locking means, **characterized in that** at least said first part (101) or said second part (102) includes an adjustable link (1) according to any of the preceding claims.

14. Watch case (301), **characterized in that** the case includes a middle part forming a said adjustable link (1) according to any of claims 1 to 12 or **in that** the case incorporates a said adjustable link (1).

15. Bracelet (200) including at least a first bracelet strand (201) and a second bracelet strand (202), **characterized in that** the bracelet includes at least one adjustable link (1) according to any of claims 1 to 12, said adjustable link (1) being either inserted between said first strand (201) and said second strand (202) to which said link is connected by first fastening means (91) between said first half link (2) and said first strand (201) and by second fastening means (92) between said second half link (3) and said second strand (202), or incorporated in a said clasp (100) according to claim 13, said first part (101) being connected by first fastening means (93) to said first strand (201) and said second part (102) being connected by second fastening means (94) to said second strand (202).

16. Bracelet (200) according to the preceding claim, **characterized in that** the bracelet is a hinged bracelet including a series of links (4) hinged to each other and wherein at least one is a said adjustable link (1).

17. Bracelet (200) according to the preceding claim, **characterized in that** the bracelet includes a said clasp (100) according to claim 13, and **in that** all the other said links (4) forming said bracelet (200) are hinged to each other in an irreversible assembly preventing the disassembly thereof.

18. Bracelet (200) according to the preceding claim, **characterized in that** the bracelet includes several said links (4), each formed of a said adjustable link (1) so as to cover the entire range of adjustment of said bracelet (200) by combining the range of adjustment of all of said adjustable links.

19. Watch (300) including a bracelet (200) according to any of claims 15 to 18, **characterized in that** a said first strand (201) and a said second strand (202) of said bracelet (200) hold a watch case (301) on both sides.

20. Watch (300) according to the preceding claim, **characterized in that** said case (301) thereof includes a middle part forming a said adjustable link (1) according to any of claims 1 to 12, or **in that** said case (301) thereof incorporates a said adjustable link (1) according to any of claims 1 to 12.
